# EUROPÄISCHE PATENTANMELDUNG

(11) **EP 2 735 393 A1**
(43) Veröffentlichungstag der Anmeldung: **28.05.2014**
(21) Anmeldenummer: 12193594.4
(22) Anmeldetag: 21.11.2012
(51) Int. Cl.: B23B 31/26, B23B 31/20

(54) **Werkzeug-Spannvorrichtung zum Spannen eines manuell geführten Werkzeugs sowie Verfahren zum Spannen eines manuell geführten Werkzeugs in einer derartigen Werkzeug-Spannvorrichtung**

(71) Anmelder: August Rüggeberg GmbH & Co. KG, 51709 Marienheide (DE)
(72) Erfinder: Perchalla, Jens, 51688 Wipperfürth (DE)
(74) Vertreter: Rau, Schneck & Hübner Patentanwälte Rechtsanwälte PartGmbB

(57) **Zusammenfassung**

Eine Werkzeug-Spannvorrichtung (4) weist zum Spannen eines manuell geführten Werkzeugs (5) ein Gehäuse (6) mit zwei relativ zueinander um eine Drehachse (9) drehbaren Gehäusebauteilen (7, 8) auf. In dem Gehäuse (6) ist eine Werkzeugspindel (14) mit einer Spanneinheit (15) und einer mit der Spanneinheit (15) gekoppelten Übertragungsstange (16) gelagert. Zum manuellen Umschalten zwischen einer Betriebsstellung und einer Werkzeugwechselstellung weist die Werkzeug-Spannvorrichtung (4) eine Umschalteinheit (43) auf, die derart ausgebildet ist, dass in der Betriebsstellung die Werkzeugspindel (14) zum Drehantreiben des Werkzeugs (5) um die Drehachse (9) drehantreibbar ist, und dass in der Werkzeugwechselstellung eine Spanngewindeeinheit (44) zum Betätigen der Spanneinheit (15) drehfest mit dem einen Gehäusebauteil (7) und die Übertragungsstange (16) drehfest mit dem anderen Gehäusebauteil (8) gekoppelt ist. Durch Verdrehen der Gehäusebauteile (7, 8) ist die Übertragungsstange (16) entlang der Drehachse (9) linear verlagerbar und die Spanneinheit (15) betätigbar. Hierdurch wird auf einfache und sichere Weise ein Werkzeugwechsel ermöglicht.

## Beschreibung

Die Erfindung betrifft eine Werkzeug-Spannvorrichtung zum Spannen eines manuell geführten Werkzeugs sowie ein Verfahren zum Spannen eines manuell geführten Werkzeugs in einer derartigen Werkzeug-Spannvorrichtung. Eine derartige Werkzeug-Spannvorrichtung ist beispielsweise für Biegwellenantriebe und Elektrogeradschleifer einsetzbar.

Biegwellenantriebe werden für manuelle Fräs-, Schleif- und/oder Polierarbeiten eingesetzt. Bekannte Biegwellenantriebe weisen ein als Werkzeug-Spannvorrichtung dienendes Handstück auf, dessen Werkzeugspindel von einer Antriebsvorrichtung bzw. Antriebsmaschine über eine sogenannte Biegwelle drehangetrieben wird. Ein in der Werkzeugspindel gespanntes Werkzeug, beispielsweise ein Fräs-, Schleif- oder Polier-Werkzeug wird somit drehangetrieben und ist aufgrund der biegsamen Biegwelle einfach und flexibel einsetzbar, da das drehangetriebene Werkzeug mittels der Werkzeug-Spannvorrichtung bzw. des Handstücks auch zu schwer erreichbaren Bearbeitungsstellen manuell führbar ist. Zum Werkzeugwechsel wird die Spanneinheit der Werkzeugspindel mittels eines Betätigungswerkzeugs gelöst und nach dem Werkzeugwechsel mittels des Betätigungswerkzeugs wieder gespannt. Durch das Betätigungswerkzeug wird gewährleistet, dass eine Bedienperson eine ausreichende Löse- bzw. Spannkraft manuell aufbringen kann. Nachteilig bei derartigen bekannten Werkzeug-Spannvorrichtungen bzw. Handstücken ist, dass der Werkzeugwechsel schwierig und bedienerunfreundlich ist.

Dementsprechend liegt der Erfindung die Aufgabe zugrunde, eine Werkzeug-Spannvorrichtung zum Spannen eines manuell geführten Werkzeugs zu schaffen, die auf einfache und bedienerfreundliche Weise einen Werkzeugwechsel ermöglicht.

Diese Aufgabe wird durch eine Werkzeug-Spannvorrichtung mit den Merkmalen des Anspruchs 1 gelöst. Erfindungsgemäß weist die Werkzeug-Spannvorrichtung eine Umschalteinheit zum manuellen Umschalten zwischen einer Betriebsstellung bzw. einem Betriebszustand und einer Werkzeugwechselstellung bzw. einem Werkzeugwechselzustand auf. In der Betriebsstellung ist die Werkzeugspindel in dem Gehäuse um die Drehachse drehantreibbar. Die Spanngewindeeinheit rotiert in der Betriebsstellung zusammen mit der Werkzeugspindel. Zum Werkzeugwechsel wird die Umschalteinheit manuell betätigt und von der Betriebsstellung in die Werkzeugwechselstellung überführt. Dies erfolgt beispielsweise durch ein lineares Verlagern eines Umschaltelements. Zum Überführen der Umschalteinheit von der Betriebsstellung in die Werkzeugwechselstellung ist kein Betätigungswerkzeug erforderlich. In der Werkzeugwechselstellung ist die Spanngewindeeinheit drehfest mit dem ersten Gehäusebauteil und die Übertragungsstange drehfest mit dem zweiten Gehäusebauteil gekoppelt. Da die Gehäusebauteile relativ zueinander um die Drehachse verdrehbar sind, ist in der Werkzeugwechselstellung die Übertragungsstange durch manuelles Verdrehen der Gehäusebauteile entlang der Drehachse linear verlagerbar. Da die Übertragungsstange mit der Spanneinheit gekoppelt ist, ist durch das lineare Verlagern der Übertragungsstange die Spanneinheit betätigbar. Je nach Verdrehrichtung der Gehäusebauteile und der zugehörigen linearen Verlagerungsrichtung der Übertragungsstange wird ein in der Spanneinheit gespanntes Werkzeug gelöst bzw. ein in der Spanneinheit zu spannendes Werkzeug gespannt. Zum Spannen und Lösen eines Werkzeugs ist somit ebenfalls kein Betätigungswerkzeug erforderlich. Durch das Übersetzungsverhältnis zwischen der Verdrehbewegung der Gehäusebauteile und der hieraus resultierenden Linearbewegung der Übertragungsstange wird gewährleistet, dass von einer Bedienperson eine ausreichende Kraft zum Lösen und Spannen des jeweiligen Werkzeugs aufbringbar ist. Durch die erfindungsgemäße Werkzeug-Spannvorrichtung wird somit ein Werkzeugwechsel ohne ein Betätigungswerkzeug zum Spannen und Lösen der Spanneinheit ermöglicht. Einer Bedienperson ist es möglich, zum Spannen und Lösen eines Werkzeugs mit der einen Hand das erste Gehäusebauteil um die Drehachse zu Drehen und mit der anderen Hand das zweite Gehäusebauteil festzuhalten. Zum Spannen und Lösen eines Werkzeugs sind somit die beiden Hände einer Bedienperson ausreichend. Ein Halten der Werkzeug-Spannvorrichtung beim Werkzeugwechsel zwischen den Beinen - wie dies bei den bekannten Werkzeug-Spannvorrichtungen erforderlich ist - ist bei der erfindungsgemäßen Werkzeug-Spannvorrichtung nicht nötig.

Eine Werkzeug-Spannvorrichtung nach Anspruch 2 gewährleistet auf einfache Weise ein Umschalten zwischen der Betriebsstellung und der Werkzeugwechselstellung. Das Umschaltelement ist beispielsweise als eine das Gehäuse umgebende Hülse bzw. Griffhülse ausgebildet, die zum Wechseln zwischen der Betriebsstellung und der Werkzeugwechselstellung linear verlagerbar ist. In der Betriebsstellung ist das erste Arretierelement nicht mit der Spanngewindeeinheit gekoppelt, so dass diese frei um die Drehachse drehbar ist. Entsprechend ist in der Betriebsstellung das Umschaltelement nicht mit der Übertragungsstange gekoppelt, so dass diese ebenfalls frei um die Drehachse drehbar ist. Demgegenüber ist in der Werkzeugwechselstellung das erste Arretierelement drehfest mit der Spanngewindeeinheit gekoppelt. Da das erste Arretierelement drehfest mit dem Umschaltelement und dem ersten Gehäusebauteil gekoppelt ist, ist in der Werkzeugwechselstellung die Spanngewindeeinheit drehfest mit dem ersten Gehäusebauteil verbunden. Entsprechend ist das zweite Arretierelement in der Werkzeugwechselstellung drehfest mit der Übertragungsstange und dem zweiten Gehäusebauteil gekoppelt, so dass das zweite Gehäusebauteil drehfest mit der Übertragungsstange verbunden ist. Da die Arretierelemente relativ zueinander verdrehbar sind, ist durch Verdrehen der Gehäusebauteile relativ zueinander die Spanngewindeeinheit betätigbar, so dass die Übertragungsstange zum Spannen bzw. Lösen eines Werkzeugs linear verlagerbar ist. Vorzugsweise sind die Arretierelemente derart miteinander gekoppelt, dass diese relativ zueinander drehbar sind, jedoch linear in Richtung der Drehachse nur gemeinsam verlagerbar sind. Hierzu können die Arretierelemente beispielsweise mittels eines Runddrahtsprengrings gekoppelt sein.

Eine Werkzeug-Spannvorrichtung nach Anspruch 3 ermöglicht eine einfache manuelle Betätigung des Umschaltelements. Dadurch, dass das Umschaltelement zum Wechseln von der Betriebsstellung in die Werkzeugwechselstellung und umgekehrt linear in Richtung der Drehachse verlagerbar ist, werden die mit dem Umschaltelement gekoppelten Arretierelemente ebenfalls linear verlagert, wodurch in der Werkzeugwechselstellung die drehfeste Verbindung zwischen der Spanngewindeeinheit und dem ersten Gehäusebauteil sowie die drehfeste Verbindung der Übertragungsstange mit dem zweiten Gehäusebauteil erzielt wird. Bei einer Betätigung in umgekehrter Richtung, also einem Überführen des Umschaltelements in die Betriebsstellung, werden die drehfesten Verbindungen demgegenüber wieder gelöst. Durch die Ausbildung des Umschaltelements als Hülse bzw. Griffhülse ist eine besonders einfache manuelle Überführung des Umschaltelements von der Betriebsstellung in die Werkzeugwechselstellung und umgekehrt möglich.

Eine Werkzeug-Spannvorrichtung nach Anspruch 4 gewährleistet eine drehfeste Verbindung der Spanngewindeeinheit und des ersten Gehäusebauteils in der Werkzeugwechselstellung.

Eine Werkzeug-Spannvorrichtung nach Anspruch 5 gewährleistet eine sichere Bedienung. Durch die Ausbildung von Raststellungen für die Betriebsstellung und die Werkzeugwechselstellung wird eine einfache und sichere Betätigung des Umschaltelements gewährleistet. Ein selbsttätiges Überführen des Umschaltelements von der Betriebsstellung in die Werkzeugwechselstellung und umgekehrt wird hierdurch vermieden.

Eine Werkzeug-Spannvorrichtung nach Anspruch 6 gewährleistet ein einfache und sichere Bedienung in der Werkzeugwechselstellung. Die formschlüssige Kopplung bzw. Verbindung ist beispielsweise durch mindestens einen Arretierstift ausgebildet, der in eine zugehörige Arretierausnehmung einführbar ist. Der mindestens eine Arretierstift ist beispielsweise Teil des ersten Arretierelements, wobei an der Spanngewindeeinheit die zugehörige Arretierausnehmung ausgebildet ist. Vorzugsweise verjüngt sich der mindestens eine Arretierstift in Richtung der Arretierausnehmung, so dass dieser beim Überführen in die Werkzeugwechselstellung einfach in die zugehörige Arretierausnehmung einführbar ist.

Eine Werkzeug-Spannvorrichtung nach Anspruch 7 gewährleistet auf einfache Weise eine drehfeste Verbindung zwischen dem zweiten Gehäusebauteil und der Übertragungsstange in der Werkzeugwechselstellung.

Eine Werkzeug-Spannvorrichtung nach Anspruch 8 gewährleistet auf einfache Weise eine drehfeste Verbindung zwischen der Übertragungsstange und dem Gehäusebauteil in der Werkzeugwechselstellung. Beispielsweise ist das zweite Arretierelement als Hülse ausgebildet, die an einer Innenseite eine Innenverzahnung aufweist. Zur Ausbildung einer drehfesten Verbindung ist die Übertragungsstange in einem Arretierbereich im Querschnitt polygonförmig ausgebildet, so dass die Innenverzahnung bei einer entsprechenden linearen Verschiebung des zweiten Arretierelements mit dem Arretierbereich der Übertragungsstange eine drehfeste Verbindung ausbildet. Darüber hinaus weist das zweite Gehäusebauteil beispielsweise axial verlaufende Arretiernuten an einer Innenseite auf. Zur Ausbildung einer drehfesten Verbindung weist das als Hülse ausgebildete zweite Arretierelement an einer Außenseite axial verlaufende Arretiervorsprünge auf, die beispielsweise als Arretierpassfedern ausgebildet sind. Die Arretiervorsprünge sind in den zugehörigen Arretiernuten angeordnet, so dass zwischen dem zweiten Gehäusebauteil und dem zweiten Arretierelement bzw. der Übertragungsstange eine drehfeste Verbindung ausgebildet wird.

Eine Werkzeug-Spannvorrichtung nach Anspruch 9 gewährleistet in einfacher Weise die Umwandlung der Verdrehbewegung der Gehäusebauteile in eine Linearbewegung der Übertragungsstange. Die Spanngewindemutter ist hülsenförmig ausgebildet und weist an einer Innenseite das Spanngewinde auf. Die Spanngewindemutter ist mit dem Spanngewinde auf die Übertragungsstange aufgeschraubt. Hierdurch wird ein Lineargetriebe ausgebildet, das die Verdrehbewegung in eine Linearbewegung umwandelt. Über die Gewindesteigung des Spanngewindes ist das Übersetzungsverhältnis einstellbar. Hierdurch wird gewährleistet, dass von einer Bedienperson eine ausreichende Kraft aufbringbar ist, um das Werkzeug manuell zu lösen bzw. sicher zu spannen. Zum linearen Verlagern der Übertragungsstange durch Verdrehen der Gehäusebauteile ist die Spanngewindemutter mittels des ersten Arretierelements drehfest mit dem ersten Gehäusebauteil verbindbar bzw. koppelbar.

Eine Werkzeug-Spannvorrichtung nach Anspruch 10 gewährleistet in sicherer Weise eine drehfeste Verbindung zwischen dem ersten Arretierelement und der Spanngewindeeinheit bzw. der Spanngewindemutter in der Werkzeugwechselstellung. Das Kopplungselement ist beispielsweise als ringförmige Scheibe ausgebildet, die mittels eines Innenprofils an einem zugehörigen Außenprofil der Spanngewindemutter drehfest angeordnet ist, jedoch entlang der Drehachse relativ zu der Spanngewindemutter verlagerbar ist. An einer dem ersten Arretierelement gegenüberliegenden Seite des Kopplungselements ist das mindestens eine Federelement angeordnet, das an der Spanngewindemutter festgelegt ist. Das Kopplungselement weist beispielsweise eine Außenverzahnung auf, in die die Arretierstifte des ersten Arretierelements eingreifen können. Hierdurch wird bei einer Verlagerung des Umschaltelements bzw. des ersten Arretierelements eine drehfeste Verbindung zwischen dem ersten Arretierelement und dem Kopplungselement erzeugt, wobei das Kopplungselement aufgrund der linearen Verlagerung des ersten Arretierelements gegenüber dem mindestens einen Federelement vorgespannt wird. Aufgrund der Vorspannung kann sich die drehfeste Verbindung in der Werkzeugwechselstellung nicht selbsttätig lösen. Das mindestens eine Federelement kann beispielsweise als Tellerfeder oder Schraubenfeder ausgebildet sein.

Eine Werkzeug-Spannvorrichtung nach Anspruch 11 gewährleistet einen sicheren Betrieb. Dadurch, dass die Spanngewindemutter in der Betriebsstellung drehfest mit der Werkzeugspindel gekoppelt ist, kann sich die Spanngewindemutter in der Betriebsstellung nicht selbsttätig lösen. Die Spanngewindemutter rotiert in der Betriebsstellung mit der Werkzeugspindel mit. Hierzu ist das Sicherungselement beispielsweise als Hülse ausgebildet, die drehfest mit der Werkzeugspindel verbunden ist und in der Betriebsstellung mit dem Kopplungselement eine drehfeste Verbindung ausbildet. Hierzu sind das Sicherungselement und das Kopplungselement in der Betriebsstellung beispielsweise formschlüssig verbunden. Das Kopplungselement weist beispielsweise an der dem Sicherungselement zugewandten Seite Sicherungsstifte auf, die in zugehörige Sicherungsausnehmungen des Sicherungselements eingreifen. Das Eingreifen kann beispielsweise selbsttätig aufgrund der Vorspannkraft des mindestens einen Federelements erfolgen.

Eine Werkzeug-Spannvorrichtung nach Anspruch 12 gewährleistet in einfacher und sicherer Weise ein Spannen und Lösen des Werkzeugs.

Eine Werkzeug-Spannvorrichtung nach Anspruch 13 gewährleistet eine hohe Zuverlässigkeit.

Eine Werkzeug-Spannvorrichtung nach Anspruch 14 gewährleistet dauerhaft eine hohe Spannkraft. Bei Verschleiß kann die Spannzange und/oder der Spannkonus einfach ersetzt werden, da bei Entfernen der Spannmutter die Spannzange und der Spannkonus leicht zugänglich sind.

Der Erfindung liegt weiterhin die Aufgabe zugrunde, ein Verfahren zum Spannen eines manuell geführten Werkzeugs zu schaffen, das einen einfachen und bedienerfreundlichen Werkzeugwechsel ermöglicht.

Diese Aufgabe wird durch ein Verfahren mit den Merkmalen des Anspruchs 15 gelöst. Die Vorteile des erfindungsgemäßen Verfahrens entsprechen den bereits beschriebenen Vorteilen der erfindungsgemäßen Werkzeug-Spannvorrichtung. Das erfindungsgemäße Verfahren kann insbesondere auch mit den Merkmalen der Ansprüche 2 bis 14 weitergebildet werden.

Weitere Merkmale, Vorteile und Einzelheiten der Erfindung ergeben sich aus der nachfolgenden Beschreibung eines Ausführungsbeispiels. Es zeigen:
- Fig. 1: eine erste Seitenansicht einer Biegwellen-Antriebvorrichtung mit einer erfindungsgemäßen Werkzeug-Spannvorrichtung,
- Fig. 2: eine um 90° gedrehte zweite Seitenansicht der Werkzeug-Spannvorrichtung in Fig. 1,
- Fig. 3: eine Frontansicht der Werkzeug-Spannvorrichtung in Fig. 1,
- Fig. 4: einen Axialschnitt durch die Werkzeug-Spannvorrichtung in Fig. 1 in einer Betriebsstellung einer Umschalteinheit,
- Fig. 5: einen vergrößerten Axialschnitt der Umschalteinheit in Fig. 4,
- Fig. 6: einen vergrößerten Axialschnitt der Umschalteinheit in Fig. 5 um 90° gedreht,
- Fig. 7: einen Axialschnitt durch die Werkzeug-Spannvorrichtung in Fig. 2 in einer Werkzeugwechselstellung der Umschalteinheit,
- Fig. 8: einen vergrößerten Axialschnitt der Umschalteinheit in Fig. 7, und
- Fig. 9: einen vergrößerten Axialschnitt der Umschalteinheit in Fig. 8 um 90° gedreht.

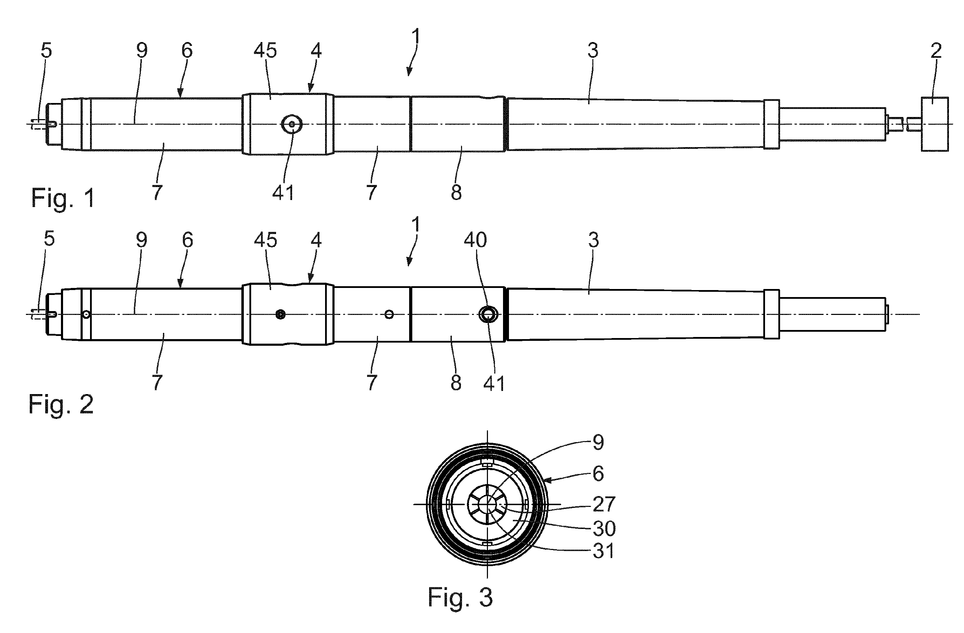

Eine in Fig. 1 lediglich schematisch dargestellte Biegwellen-Antriebsvorrichtung weist einen Antrieb 2, eine flexible Biegwelle 3 und eine Werkzeug-Spannvorrichtung 4 auf. Der Antrieb 2 dient zum Drehantreiben eines in der Werkzeug-Spannvorrichtung 4 gespannten Werkzeugs 5 durch Übertragen eines Antriebsdrehmoments über die Biegwelle 3 und die Werkzeug-Spannvorrichtung 4 zu dem Werkzeug 5. Das Werkzeug 5 ist beispielsweise als Fräs-, Schleif- und/oder Polier-Werkzeug ausgebildet. Der Aufbau des Antriebs 2 sowie der Biegwelle 3 ist bekannt und üblich.

Die Werkzeug-Spannvorrichtung 4 dient zum manuellen Spannen bzw. zum manuellen Lösen des Werkzeugs 5 sowie zum manuellen Führen des Werkzeugs 5 bei einer Werkstückbearbeitung. Die Werkzeug-Spannvorrichtung 4 wird dementsprechend auch als Handstück bezeichnet.

Die Werkzeug-Spannvorrichtung 4 weist ein Gehäuse 6 auf, das ein hohlzylinderförmiges erstes Gehäusebauteil 7 und ein zugehöriges hohlzylinderförmiges zweites Gehäusebauteil 8 umfasst. Das zweite Gehäusebauteil 8 erstreckt sich teilweise in das erste Gehäusebauteil 7 und ist in diesem um eine Drehachse 9 drehbar gelagert. Hierzu sind an einer Außenseite des zweiten Gehäusebauteils 8 über den Umfang verteilt mehrere Kugeln 10 gelagert, die in einer zugehörigen Ringnut 11 des ersten Gehäusebauteils 7 angeordnet sind. Zusätzlich sind zwischen den Gehäusebauteilen 7, 8 in zugehörigen Ringnuten 12 des zweiten Gehäusebauteils 8 zwei ringförmige Gleitelemente 13 angeordnet.

In dem Gehäuse 6 ist eine Werkzeugspindel 14 um die Drehachse 9 drehbar gelagert. Die Werkzeugspindel 14 umfasst eine Spanneinheit 15 zum Spannen bzw. Lösen des Werkzeugs 5, eine mit der Spanneinheit 15 gekoppelte Übertragungsstange 16, eine die Übertragungsstange 16 und teilweise die Spanneinheit 15 umgebende Spindelhülse 17 sowie eine zugehörige Spindelmutter 18. Zur drehbaren Lagerung der Werkzeugspindel 14 in dem Gehäuse 6 sind zwischen der Werkzeugspindel 14 und dem ersten Gehäusebauteil 7 zwei voneinander beabstandete Radiallager 19, 20 angeordnet. Ein erstes Radiallager 19 ist im Bereich eines der Spanneinheit 15 zugewandten Endes der Übertragungsstange 16 zwischen der Spindelhülse 17 und dem ersten Gehäusebauteil 7 angeordnet. Das erste Radiallager 19 ist in axialer Richtung durch einen ringförmigen Anschlag 21 der Spindelhülse 17 und durch einen Sicherungsring 22 gesichert, wobei der Sicherungsring 22 in dem ersten Gehäusebauteil 7 in axialer Richtung festgelegt ist. Zwischen dem ersten Radiallager 19 und dem Sicherungsring 22 sowie dem ersten Gehäusebauteil 7 ist jeweils ein Vibrationsdämpfungsring 23 angeordnet. Endseitig an dem ersten Gehäusebauteil 7 ist mittels einer Schraubverbindung eine Abschlusshülse 24 befestigt. Zwischen der Abschlusshülse 24 und dem ersten Radiallager 19 ist ein weiterer Vibrationsdämpfungsring 23 angeordnet.

Das zweite Radiallager 20 ist mittels einer Distanzhülse 25 in axialer Richtung von dem ersten Radiallager 19 beabstandet. Die Distanzhülse 25 umgibt die Spindelhülse 17. Dadurch, dass die Distanzhülse 25 einen Ringanschlag 26 ausbildet, ist das zweite Radiallager 20 in axialer Richtung gesichert. Zusätzlich wird das zweite Radiallager 20 durch die Spindelmutter 18 gesichert, die endseitig auf die Spindelhülse 17 aufgeschraubt ist. Zwischen dem zweiten Radiallager 20 und dem ersten Gehäusebauteil 7 ist wiederum ein Vibrationsdämpfungsring 23 angeordnet.

Die Spanneinheit 15 dient zum Spannen bzw. Lösen des jeweiligen Werkzeugs 5. Hierzu weist die Spanneinheit 15 eine axial geschlitzte Spannzange 27 und einen zugehörigen Spannkonus 28 auf. Der Spannkonus 28 ist mittels einer Schraubverbindung lösbar endseitig an der Übertragungsstange 16 befestigt. Der Spannkonus 28 und die Übertragungsstange 16 sind in axialer Richtung verschiebbar in der Spindelhülse 17 gelagert. Hierzu ist die Spindelhülse 17 hohlzylinderförmig ausgebildet, wobei sich deren Innendurchmesser ausgehend von einem ersten Innendurchmesser zur Aufnahme der Übertragungsstange 16 bis zu einem zweiten Innendurchmesser zur Aufnahme des Spannkonus 28 erweitert. Der Spannkonus 28 ist hohlzylinderförmig ausgebildet und weist einen sich in Richtung der Übertragungsstange 16 verjüngenden Innendurchmesser auf. In dem Spannkonus 28 ist die Spannzange 27 gelagert, die einen Außendurchmesser aufweist, der sich entsprechend dem Innendurchmesser des Spannkonus 28 verjüngt. Die Spannzange 27 ist mittels eines Sicherungsrings 29 an einer die Spannzange 27 umgebenden Spannmutter 30 festgelegt. Die Spannmutter 30 ist endseitig mittels einer Schraubverbindung an der Spindelhülse 17 befestigt, so dass die Spannzange 27 über die Spannmutter 30 in Richtung der Drehachse 9 gegen Verschiebung gesichert ist.

Die Spannzange 27 bildet eine Werkzeugaufnahme 31 aus, deren Durchmesser zum Spannen bzw. Lösen des jeweiligen Werkzeugs 5 veränderbar ist. Durch eine lineare Verschiebung der Übertragungsstange 16 und des daran befestigten Spannkonus 28 entlang der Drehachse 9 in Richtung der Spannzange 27 ist der Durchmesser der Werkzeugaufnahme 31 aufgrund der Ausbildung der Spannzange 27 und des Spannkonus 28 verkleinerbar. Diese Verschieberichtung ist nachfolgend als Spannrichtung 32 bezeichnet. In einer entgegengesetzten Löserichtung 33 ist der Durchmesser der Werkzeugaufnahme 31 zum Lösen des jeweiligen Werkzeugs 5 vergrößerbar.

Zum Drehantreiben des Werkzeugs 5 weist die Übertragungsstange 16 an einem der Spanneinheit 15 gegenüberliegenden Ende eine konzentrisch zu der Drehachse 9 verlaufende Anschlussbohrung 34 für die Biegwelle 3 auf. In die Anschlussbohrung 34 erstrecken sich mehrere an der Übertragungsstange 16 befestigte Drehmomentübertragungselemente 35, die sich in zugehörige Drehmomentübertragungsnuten 36 der Biegwelle 3 erstrecken. Im Bereich der Anschlussbohrung 34 ist an der Übertragungsstange 16 ein Einführelement 37 befestigt, das eine Einführöffnung 38 für die Biegwelle 3 ausbildet, die sich in Richtung der Anschlussbohrung 34 verjüngt. Das Einführelement 37 ist fest mit der Übertragungsstange 16 verbunden, jedoch mittels eines Gleitrings 39 in Richtung der Drehachse 9 verschiebbar in dem zweiten Gehäusebauteil 8 gelagert. Die Anschlussbohrung 34 bildet zusammen mit den Drehmomentübertragungselementen 35 und dem Einführelement 37 einen Gleitanschluss für die Biegwelle 3 aus, in dem die Biegwelle 3 aufgrund der Drehmomentübertragungsnuten 36 verschiebbar gelagert ist. Zur Sicherung der Biegwelle 3 weist das zweite Gehäusebauteil 8 eine Rastausnehmung 40 auf, in die ein Rastknopf 41 der Biegwelle 3 einrastbar ist. Aufgrund des Gleitanschlusses sowie der gleitfähigen Lagerung der Übertragungsstange 16 sowie des Spannkonus 28 in der Spindelhülse 17 ist die Übertragungsstange 16 in axialer Richtung verschiebbar. Zum Drehantreiben der Werkzeugspindel 14 sind zwischen der Übertragungsstange 16 und der Distanzhülse 25 Drehmomentübertragungselemente 42 angeordnet.

Die Werkzeug-Spannvorrichtung 4 ist mittels einer Umschalteinheit 43 von einer Betriebsstellung bzw. einem Betriebszustand in eine Werkzeugwechselstellung bzw. einen Werkzeugwechselzustand überführbar und umgekehrt. Die Umschalteinheit 43 wirkt mit einer Spanngewindeeinheit 44 zum Betätigen der Spanneinheit 15 zusammen. In der Betriebsstellung ist die Umschalteinheit 43 von der Spanngewindeeinheit 44 entkoppelt, so dass die Werkzeugspindel 14 zum Drehantreiben des Werkzeugs 5 mittels der Biegwelle 3 um die Drehachse 9 drehantreibbar ist. Demgegenüber ist die Spanngewindeeinheit 44 in der Werkzeugwechselstellung mittels der Umschalteinheit 43 drehfest mit dem ersten Gehäusebauteil 7 und die Übertragungsstange 16 drehfest mit dem zweiten Gehäusebauteil 8 gekoppelt, so dass durch Verdrehen der Gehäusebauteile 7, 8 relativ zueinander die Übertragungsstange 16 entlang der Drehachse 9 linear verlagerbar und somit die Spanneinheit 15 betätigbar ist.

Die Umschalteinheit 43 weist zum manuellen Umschalten ein Umschaltelement 45 auf, das als Hülse bzw. Griffhülse ausgebildet ist. Das Umschaltelement 45 umgibt das erste Gehäusebauteil 7 und ist drehfest, jedoch in axialer Richtung verschiebbar an diesem gelagert. Hierzu sind in dem ersten Gehäusebauteil 7 Verschiebenuten 46 ausgebildet, durch die sich zugehörige Befestigungsschrauben 47 erstrecken, die das Umschaltelement 45 mit einem ersten Arretierelement 48 verbinden. Das erste Arretierelement 48 ist als Hülse bzw. Schiebehülse ausgebildet und innerhalb des ersten Gehäusebauteils 7 angeordnet. Das erste Arretierelement 48 ist aufgrund der Schraubverbindung mit dem Umschaltelement 45 drehfest an dem ersten Gehäusebauteil 7 angeordnet, jedoch relativ zu diesem in axialer Richtung linear verschiebbar. Das erste Arretierelement 48 ist in der Betriebsstellung von der Spanngewindeeinheit 44 entkoppelt. Demgegenüber ist das erste Arretierelement 48 in der Werkzeugwechselstellung mit der Spanngewindeeinheit 44 gekoppelt, so dass eine drehfeste Verbindung zwischen der Spanngewindeeinheit 44 und dem Umschaltelement 45 sowie dem ersten Gehäusebauteil 7 ausgebildet ist. Der Wechsel zwischen der Betriebsstellung und der Werkzeugwechselstellung erfolgt durch lineares Verschieben des Umschaltelements 45.

Das erste Arretierelement 48 bildet zwei federnde Rastzungen 49 aus, die einander gegenüberliegend angeordnet sind. Die Rastzungen 49 sind jeweils um 90° gedreht zu den Befestigungsschrauben 47 angeordnet. Die Rastzungen 49 wirken jeweils mit zwei zugehörigen Rastausnehmungen 50 zusammen, die endseitig der zugehörigen Verschiebenuten 46 an der Innenseite des ersten Gehäusebauteils 7 ausgebildet sind. Hierdurch werden zwei Raststellungen für die Betriebsstellung und die Werkzeugwechselstellung ausgebildet. Zum Betätigen der Rastzungen 49 sind in dem Umschaltelement 45 zwei zugehörige Betätigungselemente 51 ausgebildet, mittels denen die Raststellungen lösbar sind. Die Betätigungselemente 51 sind beispielsweise als Druckknöpfe ausgebildet.

An dem ersten Arretierelement 48 ist endseitig ein zweites Arretierelement 52 angeordnet. Hierzu ist zwischen den Arretierelementen 48, 52 eine Drehverbindung 53 ausgebildet, die die Arretierelemente 48, 52 in axialer Richtung zueinander festlegt, jedoch eine Drehung der Arretierelemente 48, 52 relativ zueinander um die Drehachse 9 ermöglicht. Die Drehverbindung 53 ist beispielsweise als Runddrahtsprengring ausgebildet. Das zweite Arretierelement 52 ist somit mittels der Drehverbindung 53 in axialer Richtung mit dem Umschaltelement 45 gekoppelt, jedoch relativ zu dem ersten Arretierelement 48 drehbar. In der Betriebsstellung ist das zweite Arretierelement 52 von der Übertragungsstange 16 entkoppelt. Demgegenüber ist das zweite Arretierelement 52 in der Werkzeugwechselstellung mit der Übertragungsstange 16 und dem zweiten Gehäusebauteil 8 gekoppelt, so dass eine drehfeste Verbindung zwischen der Übertragungsstange 16 und dem zweiten Gehäusebauteil 8 ausgebildet ist.

Das erste Arretierelement 48 ist mit der Spanngewindeeinheit 44 in der Werkzeugwechselstellung formschlüssig gekoppelt. Hierzu weist das erste Arretierelement 48 mehrere über den Umfang verteilte Arretierstifte 54 auf, die in zugehörige Arretierausnehmungen 55 der Spanngewindeeinheit 44 eingreifen, wenn sich das erste Arretierelement 48 in der Werkzeugwechselstellung befindet. Die Arretierstifte 54 verjüngen sich in Richtung der zugehörigen Arretierausnehmungen 55, so dass diese einfach einführbar sind.

Entsprechend ist das zweite Arretierelement 52 in der Werkzeugwechselstellung formschlüssig mit der Übertragungsstange 16 und dem zweiten Gehäusebauteil 8 gekoppelt. Hierzu ist das zweite Arretierelement 52 als Hülse ausgebildet, die die Übertragungsstange 16 umgibt und einen sich in der Löserichtung 33 erweiternden Innendurchmesser aufweist. Im Bereich des kleineren Innendurchmessers weist das zweite Arretierelement 52 eine Innenverzahnung 56 auf, die in der Werkzeugwechselstellung einen Formschluss mit einem im Querschnitt polygonförmigen Arretierbereich 57 der Übertragungsstange 16 bildet. An einer Außenseite des zweiten Arretierelements 52 sind in zugehörigen Ausnehmungen Arretierpassfedern 58 angeordnet, die in zugehörige Arretiernuten 59 des zweiten Gehäusebauteils 8 eingreifen.

Die Spanngewindeeinheit 44 umfasst eine Spanngewindemutter 60, die mittels eines Spanngewindes 61 mit der Übertragungsstange 16 verbunden ist. Die Spanngewindemutter 60 ist also hülsenförmig ausgebildet und weist ein Innengewinde auf, das auf ein zugehöriges Außengewinde geschraubt ist, das an der Übertragungsstange 16 ausgebildet ist. Durch das Spanngewinde 61 wird eine Drehbewegung der Spanngewindemutter 60 um die Drehachse 9 in eine Linearbewegung der Übertragungsstange 16 entlang der Drehachse 9 umgewandelt.

An der Spanngewindemutter 60 ist ein Kopplungselement 62 angeordnet, das als ringförmige Scheibe ausgebildet ist. Das Kopplungselement 62 ist derart formschlüssig an der Spanngewindemutter 60 befestigt, dass dieses um die Drehachse 9 drehfest mit der Spanngewindemutter 60 verbunden ist, jedoch entlang der Drehachse 9 auf der Spanngewindemutter 60 verlagerbar ist. Ein derartiger Formschluss wird beispielsweise mittels einer Profilierung 66 erzielt. Zwischen dem Kopplungselement 62 und einem an der Spanngewindemutter 60 befestigten Sicherungsring 63 sind mehrere Federelemente 64 angeordnet, so dass das Kopplungselement 62 in der Spannrichtung 32 vorgespannt ist. Das Kopplungselement 62 weist eine Außenverzahnung 65 auf, die die Arretierausnehmungen 55 für die Arretierstifte 54 bildet. Mittels des Kopplungselements 62 ist somit die Spanngewindemutter 60 in der Werkzeugwechselstellung drehfest mit dem ersten Arretierelement 48 und dem ersten Gehäusebauteil 7 gekoppelt.

Benachbart zu der Spanngewindemutter 60 ist die Spindelmutter 18 mittels eines Spindelgewindes 67 an der Spindelhülse 17 befestigt. Zwischen der Spanngewindemutter 60 und der Spindelmutter 18 ist eine Gleitringscheibe 68 auf der Übertragungsstange 16 angeordnet, gegen die die Spanngewindemutter 60 und die Spindelmutter 18 anliegen. An der Spindelmutter 18 ist ein hohlzylinderförmiges Sicherungselement 69 befestigt. Das Sicherungselement 69 ist in axialer Richtung sowie in rotatorischer Richtung um die Drehachse 9 an der Spindelmutter 18 festgelegt. Das Sicherungselement 69 erstreckt sich in Richtung der Drehachse 9 bis zu dem Kopplungselement 62 und überlappt teilweise mit der Spanngewindemutter 60. Das Sicherungselement 69 bildet im Bereich der Spanngewindemutter 60 einen ersten Ringanschlag 70 aus, dem ein zweiter Ringanschlag 71 gegenüberliegt, der von der Spanngewindemutter 60 ausgebildet wird. Zwischen den Ringanschlägen 70, 71 sind über den Umfang verteilt mehrere Kugeln 72 angeordnet, die zusammen mit der Gleitringscheibe 68 ein Verdrehen der Spanngewindemutter 60 relativ zu dem Sicherungselement 69 und der Spindelmutter 18 ermöglichen.

An einer dem Kopplungselement 62 zugewandten Stirnseite weist das Sicherungselement 69 über den Umfang verteilt mehrere Sicherungsausnehmungen 73 auf. An der dem Sicherungselement 69 zugewandten Stirnseite des Kopplungselements 62 sind entsprechende Sicherungsstifte 74 ausgebildet, die in der Betriebsstellung in die Sicherungsausnehmungen 73 eingreifen. Die Spanngewindemutter 60 wird somit in der Betriebsstellung über das Kopplungselement 62 und das Sicherungselement 69 drehfest mit der Werkzeugspindel 14 verbunden.

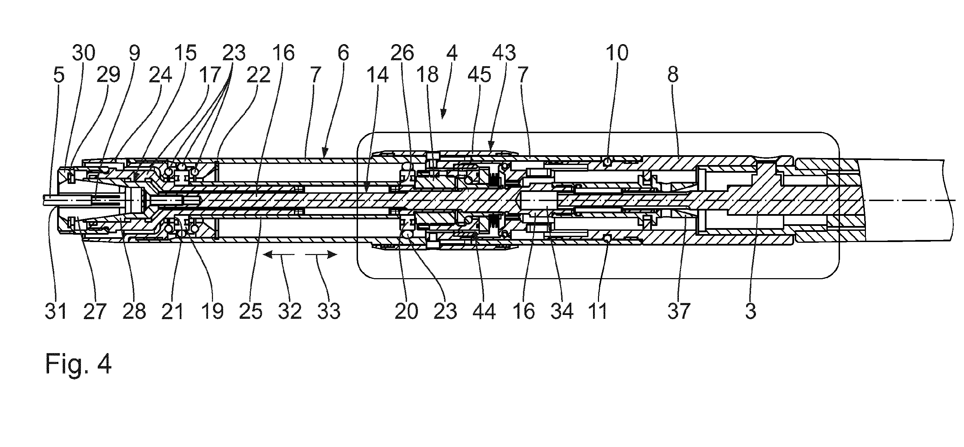

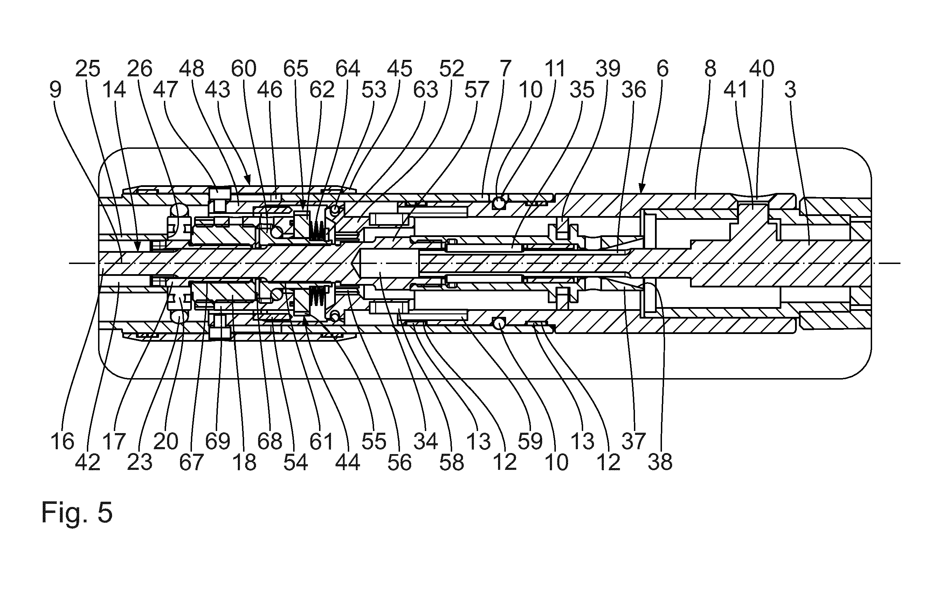

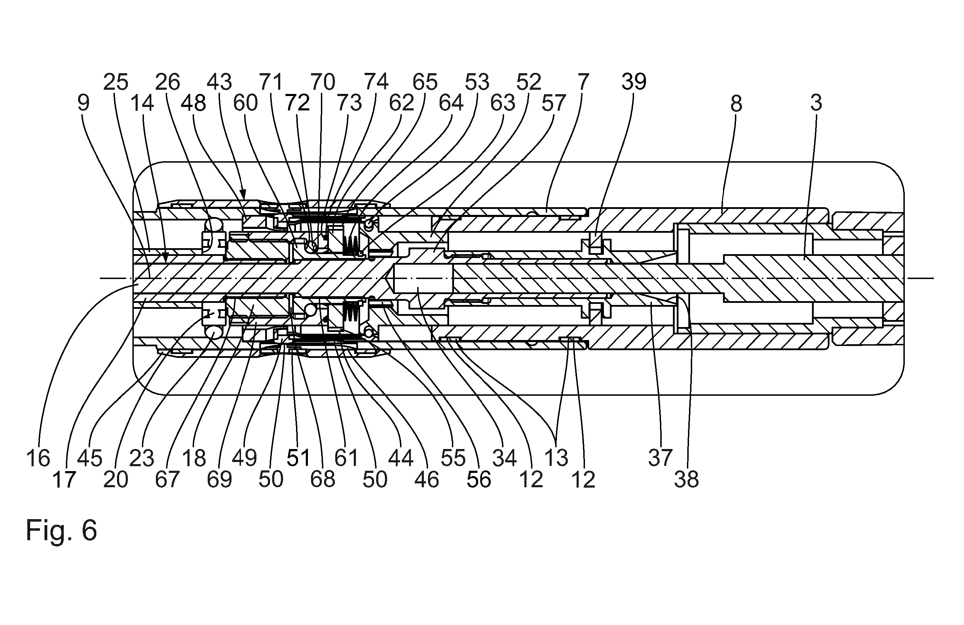

Die Funktionsweise der Biegwellen-Antriebsvorrichtung 1 bzw. der Werkzeug-Spannvorrichtung 4 ist wie folgt:
Die Betriebsstellung bzw. der Betriebszustand ist in den Fig. 4 bis 6 veranschaulicht. Das Umschaltelement 45 ist in seiner Betriebsstellung, so dass das erste Arretierelement 48 von dem Kopplungselement 62 entkoppelt ist.
Die Arretierstifte 54 greifen somit in der Betriebsstellung nicht in die Arretierausnehmungen 55 ein. Weiterhin ist das zweite Arretierelement 52 in der Betriebsstellung derart angeordnet, dass sich die Innenverzahnung 56 nicht im Arretierbereich 57 der Übertragungsstange 16 befindet. Die Übertragungsstange 16 und die Werkzeugspindel 14 sind somit frei um die Drehachse 9 drehbar. Die Übertragungsstange 16 wird mittels der von dem Antrieb 2 drehangetriebenen Biegwelle 3 drehangetrieben. Aufgrund der drehfesten Verbindung wird die Spindelhülse 17 von der Übertragungsstange 16 mitgenommen, so dass die gesamte Werkzeugspindel 14 einschließlich der Spanneinheit 15 um die Drehachse 9 rotiert. Das gespannte Werkzeug 5 wird nun drehangetrieben, so dass eine Werkstückbearbeitung stattfinden kann. Hierzu wird das Werkzeug 5 mittels der Werkzeug-Spannvorrichtung 4 manuell geführt. Die Außenseiten der Gehäusebauteile 7, 8 bilden hierbei Griffbereiche aus. Die Griffbereiche können beispielsweise eine geriffelte Oberfläche haben.

Die Spindelmutter 18 und das Sicherungselement 69 rotieren in der Betriebsstellung zusammen mit der Übertragungsstange 16. Da die Federelemente 64 das Kopplungselement 62 derart vorspannen, dass die Sicherungsstifte 74 in die zugehörigen Sicherungsausnehmungen 73 eingreifen, rotieren in der Betriebsstellung auch die Spanngewindemutter 60, das Kopplungselement 62, der Sicherungsring 23 und die Federelemente 64 mit der Übertragungsstange 16 mit. Die Spanngewindemutter 60 ist somit in der Betriebsstellung gesichert, so dass sich das gespannte Werkzeug 5 nicht selbsttätig lösen kann.

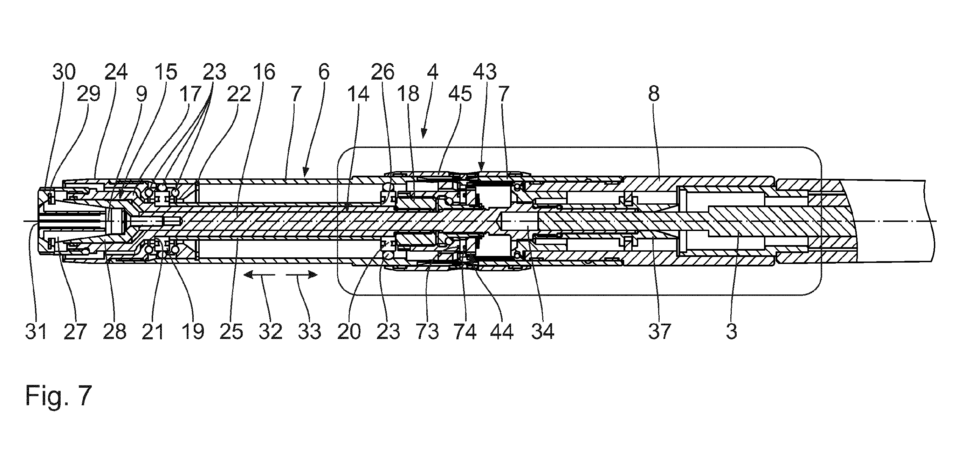

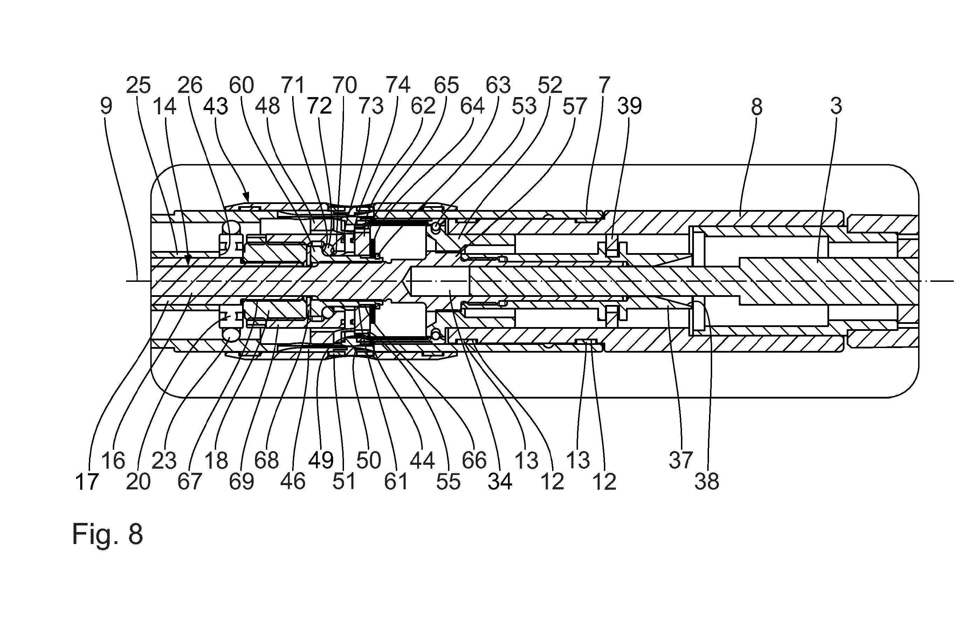

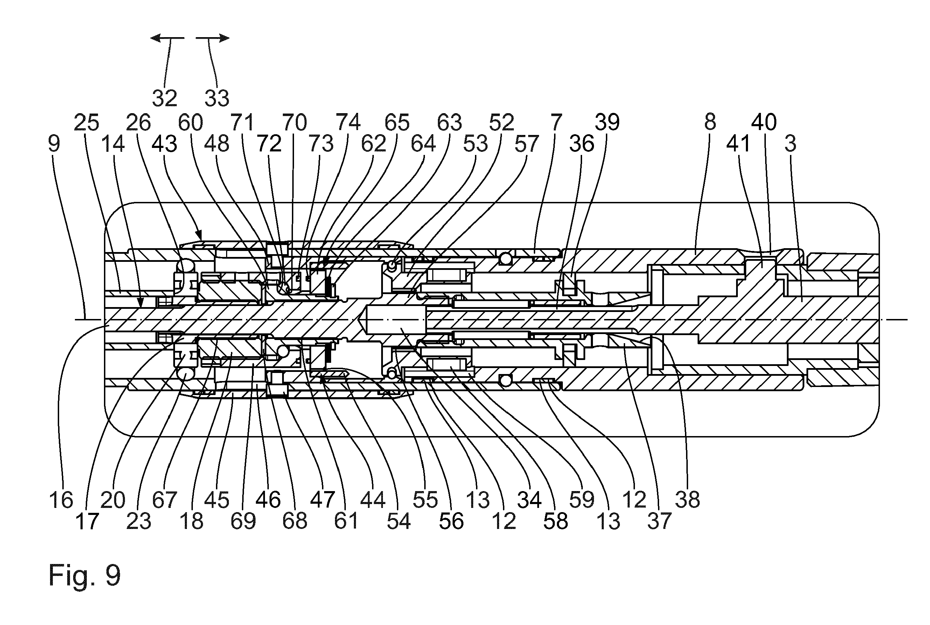

Zum Lösen des gespannten Werkzeugs 5 wird der Antrieb 2 zunächst gestoppt. Anschließend wird die Umschalteinheit 43 von der Betriebsstellung in die Werkzeugwechselstellung überführt. Hierzu werden zunächst von einer Bedienperson die Betätigungselemente 51 gedrückt, so dass die Raststellung der Rastzungen 49 gelöst wird. Das Umschaltelement 45 kann anschließend manuell aus seiner Betriebsstellung in die Werkzeugwechselstellung überführt werden, indem das Umschaltelement 45 in Löserichtung 33 bewegt wird. Befindet sich das Umschaltelement 45 in der Werkzeugwechselstellung, so nehmen die Rastzungen 49 wieder eine Raststellung ein, wenn die Betätigungselemente 51 nicht länger gedrückt werden. Die Werkzeugwechselstellung ist in den Fig. 7 bis 9 veranschaulicht.

Durch die Bewegung des Umschaltelements 45 wurden die Arretierelemente 48, 52 ebenfalls in der Löserichtung 33 bewegt. Hierdurch wurden die Arretierstifte 54 in die zugehörigen Arretierausnehmungen 55 des Kopplungselements 62 eingeführt, so dass die Spanngewindemutter 60 drehfest mit dem ersten Gehäusebauteil 7 gekoppelt wurde. Gleichzeitig wurde durch Anlage des Arretierelements 48 an dem Kupplungselement 62 dieses in der Löserichtung 33 gegen die Vorspannkraft der Federelemente 64 bewegt, sodass die Sicherungsstifte 74 aus den zugehörigen Sicherungsausnehmungen 73 bewegt wurden. Das Kopplungselement 62 und die drehfest damit verbundene Spanngewindemutter 60 sind in der Werkzeugwechselstellung somit nicht länger mit dem Sicherungselement 69 und der Spindelmutter 18 drehfest verbunden.

Durch die Bewegung des Umschaltelements 45 wurde das zweite Arretierelement 52 mit der Innenverzahnung 56 in den Arretierbereich 57 der Übertragungsstange 16 bewegt. Hierdurch wurde die Übertragungsstange 16 drehfest mit dem zweiten Arretierelement 52 gekoppelt. Nachdem die Arretierpassfedern 58 in der Betriebsstellung und in der Werkzeugwechselstellung in den zugehörigen Arretiernuten 59 angeordnet sind, wurde durch die Bewegung des Umschaltelements 45 die Übertragungsstange 16 drehfest mit dem zweiten Gehäusebauteil 8 gekoppelt.

Zum manuellen Werkzeugwechsel hält die Bedienperson nun das zweite Gehäusebauteil 8 mit einer Hand fest. Gleichzeitig dreht die Bedienperson das erste Gehäusebauteil 7 in einer Löse-Drehrichtung um die Drehachse 9, so dass die Übertragungsstange 16 in der Löserichtung 33 verlagert wird. Da die Bedienperson die Übertragungsstange 16 mit dem zweiten Gehäusebauteil 8 um die Drehachse 9 festhält, wird durch das Verdrehen des ersten Gehäusebauteils 7 um die Drehachse 9 aufgrund der drehfesten Verbindung die Spanngewindemutter 60 mitgedreht, wobei die Drehbewegung der Spanngewindemutter 60 in eine Linearbewegung der Übertragungsstange 16 in der Löserichtung 33 umgewandelt wird. Über das Übersetzungsverhältnis, mit welchem die Drehbewegung in die Linearbewegung umgewandelt wird, wird sichergestellt, dass die Bedienperson eine ausreichende Kraft aufbringen kann, um das Werkzeug 5 zu lösen bzw. zu spannen.

Durch die Linearbewegung der Übertragungsstange 16 wird der Spannkonus 28 relativ zu der Spannzange 27 in der Löserichtung 33 bewegt, wodurch die Spannzange 27 geöffnet wird. Die Bedienperson kann nun das gelöste Werkzeug 5 entnehmen und ein anderes Werkzeug 5 in die Werkzeugaufnahme 31 einführen. Das Verdrehen der Gehäusebauteile 7, 8 wird durch die Drehverbindung 53 ermöglicht, wobei die Kugeln 10 und die Gleitelemente 13 die Drehbewegung erleichtern. Weiterhin wird die Drehbewegung der Spanngewindemutter 60 durch die Kugeln 72 sowie die Gleitringscheibe 68 erleichtert, da die Spindelmutter 18 und das Sicherungselement 69 nicht mitdrehen.

Zum Spannen des Werkzeugs 5 wird das erste Gehäusebauteil 7 von der Bedienperson in einer Spann-Drehrichtung relativ zu dem zweiten Gehäusebauteil 8 verdreht, wodurch die Übertragungsstange 16 in der Spannrichtung 32 verlagert wird. Der Spannkonus 28 wird relativ zu der Spannzange 27 in der Spannrichtung 32 verlagert, wodurch sich die Werkzeugaufnahme 31 im Durchmesser verkleinert und das Werkzeug 5 gespannt wird. Durch das Spanngewinde 61 wird wiederum gewährleistet, dass die Bedienperson eine ausreichende Kraft zum Spannen des Werkzeugs 5 aufbringen kann.

Nach dem Spannen des Werkzeugs 5 wird das Umschaltelement 45 in der bereits beschriebenen Weise von der Werkzeugwechselstellung wieder in die Betriebsstellung überführt. Hierdurch werden die Arretierstifte 54 aus den zugehörigen Arretierausnehmungen 55 entfernt und das zweite Arretierelement 52 derart verlagert, dass sich die Innenverzahnung 56 nicht länger in dem Arretierbereich 57 befindet. Durch die Vorspannkraft der Federelemente 64 werden die Sicherungsstifte 74 wieder in die zugehörigen Sicherungsausnehmungen 73 eingeführt. Die Werkzeug-Spannvorrichtung 4 befindet sich nun wieder in der ursprünglichen Betriebsstellung. Das neue Werkzeug 5 kann nun in der bereits beschriebenen Weise drehangetrieben werden.

## Patentansprüche

1. Werkzeug-Spannvorrichtung zum Spannen eines manuell geführten Werkzeugs, mit
- einem Gehäuse (6) mit zwei relativ zueinander um eine Drehachse (9) drehbaren Gehäusebauteilen (7, 8),
- einer um die Drehachse (9) drehbar in dem Gehäuse (6) gelagerten Werkzeugspindel (14) mit
-- einer Spanneinheit (15) zum Spannen und Lösen eines Werkzeugs (5) und
-- einer mit der Spanneinheit (15) gekoppelten Übertragungsstange (16) zum Drehantreiben des Werkzeugs (5),
- einer Spanngewindeeinheit (44) zum Betätigen der Spanneinheit (15), und
- einer Umschalteinheit (43) zum manuellen Umschalten zwischen einer Betriebsstellung und einer Werkzeugwechselstellung,
wobei die Umschalteinheit (43) derart ausgebildet ist,
-- dass in der Betriebsstellung die Werkzeugspindel (14) zum Drehantreiben des Werkzeugs (5) um die Drehachse (9) drehantreibbar ist, und
-- dass in der Werkzeugwechselstellung
--- die Spanngewindeeinheit (44) drehfest mit dem einen Gehäusebauteil (7) und die Übertragungsstange (16) drehfest mit dem anderen Gehäusebauteil (8) gekoppelt ist und
--- durch Verdrehen der Gehäusebauteile (7, 8) die Übertragungsstange (16) entlang der Drehachse (9) linear verlagerbar und die Spanneinheit (15) betätigbar ist.

2. Werkzeug-Spannvorrichtung nach Anspruch 1, **dadurch gekennzeichnet, dass** die Umschalteinheit (43) umfasst:
- ein Umschaltelement (45),
- ein mit dem Umschaltelement (45) gekoppeltes erstes Arretierelement (48) zum drehfesten Verbinden der Spanngewindeeinheit (44) mit dem einen Gehäusebauteil (7) und
- ein mit dem Umschaltelement (45) gekoppeltes und relativ zu dem ersten Arretierelement (48) drehbares zweites Arretierelement (52) zum drehfesten Verbinden der Übertragungsstange (16) mit dem anderen Gehäusebauteil (8).

3. Werkzeug-Spannvorrichtung nach Anspruch 2, **dadurch gekennzeichnet, dass** das Umschaltelement (45) zum Wechseln von der Betriebsstellung in die Werkzeugwechselstellung linear in Richtung der Drehachse (9) verlagerbar ist und insbesondere als das zugehörige Gehäusebauteil (7) umgebende Hülse ausgebildet ist.

4. Werkzeug-Spannvorrichtung nach Anspruch 2 oder 3, **dadurch gekennzeichnet, dass** das erste Arretierelement (48) als Hülse ausgebildet ist und innerhalb des zugehörigen Gehäusebauteils (7) drehfest angeordnet ist.

5. Werkzeug-Spannvorrichtung nach einem der Ansprüche 2 bis 4, **dadurch gekennzeichnet, dass** das erste Arretierelement (48) mindestens eine federnde Rastzunge (49) ausbildet, die mit einer Innenwand des Gehäusebauteils (7) zwei Raststellungen für die Betriebsstellung und die Werkzeugwechselstellung ausbildet.

6. Werkzeug-Spannvorrichtung einem der Ansprüche 2 bis 5, **dadurch gekennzeichnet, dass** das erste Arretierelement (48) in der Werkzeugwechselstellung mit der Spanngewindeeinheit (44) und dem einen Gehäusebauteil (7) formschlüssig gekoppelt ist.

7. Werkzeug-Spannvorrichtung nach einem der Ansprüche 2 bis 6, **dadurch gekennzeichnet, dass** das zweite Arretierelement (52) als Hülse ausgebildet ist und die Übertragungsstange (16) umgibt.

8. Werkzeug-Spannvorrichtung nach einem der Ansprüche 2 bis 7, **dadurch gekennzeichnet, dass** das zweite Arretierelement (52) in der Werkzeugwechselstellung mit der Übertragungsstange (16) und dem anderen Gehäusebauteil (8) formschlüssig gekoppelt ist.

9. Werkzeug-Spannvorrichtung nach Anspruch 2 bis 8, **dadurch gekennzeichnet, dass** die Spanngewindeeinheit (44) eine Spanngewindemutter (60) umfasst, die
- mittels eines Spanngewindes (61) an der Übertragungsstange (16) angeordnet ist und
- mittels des ersten Arretierelements (48) drehfest mit dem einen Gehäusebauteil (7) koppelbar ist.

10. Werkzeug-Spannvorrichtung nach Anspruch 9, **dadurch gekennzeichnet, dass** die Spanngewindeeinheit (44) ein Kopplungselement (62) umfasst, das
- drehfest an der Spanngewindemutter (60) angeordnet und entlang der Drehachse (9) relativ zu der Spanngewindemutter (60) verlagerbar ist, und
- mittels mindestens eines Federelements (64) entlang der Drehachse (9) relativ zu der Spanngewindemutter (60) vorgespannt ist.

11. Werkzeug-Spannvorrichtung nach Anspruch 9 oder 10, **dadurch gekennzeichnet, dass** die Spanngewindeeinheit (44) ein Sicherungselement (69) umfasst, das in der Betriebsstellung die Spanngewindemutter (60) drehfest mit Werkzeugspindel (14) koppelt.

12. Werkzeug-Spannvorrichtung nach einem der Ansprüche 1 bis 11, **dadurch gekennzeichnet, dass** die Spanneinheit (15) eine Spannzange (27) und einen die Spannzange (27) umgebenden Spannkonus (28) umfasst, wobei
- der Spannkonus (28) an der Übertragungsstange (16) befestigt ist
und
- durch Verlagern des Spannkonus (28) relativ zu der Spannzange (27) entlang der Drehachse (9) die Spannzange (27) spannbar und lösbar ist.

13. Werkzeug-Spannvorrichtung nach Anspruch 12, **dadurch gekennzeichnet, dass** die Übertragungsstange (16) und der daran befestigte Spannkonus (28) in einer Spindelhülse (17) verschiebbar geführt sind.

14. Werkzeug-Spannvorrichtung nach Anspruch 12 oder 13, **dadurch gekennzeichnet, dass** die Spannzange (27) mittels einer Spannmutter (30) in Richtung der Drehachse (9) gegen Verschiebung gesichert ist, wobei die Spannmutter (30) insbesondere an der Spindelhülse (17) befestigt ist.

15. Verfahren zum Spannen eines manuell geführten Werkzeugs in einer Werkzeug-Spannvorrichtung, umfassend die Schritte:
- Bereitstellen einer Werkzeug-Spannvorrichtung (4) mit
-- einem Gehäuse (6) mit zwei relativ zueinander um eine Drehachse (9) drehbaren Gehäusebauteilen (7, 8),
-- einer um die Drehachse (9) drehbar in dem Gehäuse (6) gelagerte Werkzeugspindel (14) mit
--- einer Spanneinheit (15) zum Spannen und Lösen eines Werkzeugs (5) und
--- einer mit der Spanneinheit (15) gekoppelten Übertragungsstange (16) zum Drehantreiben des Werkzeugs (5),
-- einer Spanngewindeeinheit (44) zum Betätigen der Spanneinheit (15), und
-- eine Umschalteinheit (43) zum manuellen Umschalten zwischen einer Betriebsstellung und einer Werkzeugwechselstellung,
- Einstellen der Werkzeugwechselstellung der Umschalteinheit (43), wobei die Spanngewindeeinheit (44) drehfest mit dem einen Gehäusebauteil (7) und die Übertragungsstange (16) drehfest mit dem anderen Gehäusebauteil (8) gekoppelt wird, und
- Verdrehen der Gehäusebauteile (7, 8) derart, dass die Übertragungsstange (16) entlang der Drehachse (9) linear verlagert und mittels der Spanneinheit (15) das Werkzeug (5) gespannt wird,
- Einstellen der Betriebsstellung der Umschalteinheit (43), und
- Drehantreiben der Werkzeugspindel (14) und des gespannten Werkzeugs (5) um die Drehachse (9) in der Betriebsstellung.
